# FASCICULE DE BREVET EUROPEEN

(11) **EP 0 443 886 B1**
(45) Date de publication et mention de la délivrance du brevet: **21.06.1995**
(21) Numéro de dépôt: 91400108.6
(22) Date de dépôt: 18.01.1991
(51) Int. Cl.: B60T 13/573

(54) **Ensemble d'un servomoteur d'assistance au freinage et d'un maître-cylindre**
Aufbau eines Bremskraftverstärkers und eines Hauptzylinders
Assembly of a brake force amplifier and a master cylinder

(30) Priorité: 21.02.1990 FR 9002106
(43) Date de publication de la demande: 28.08.1991
(73) Titulaire: ALLIEDSIGNAL EUROPE SERVICES TECHNIQUES, 93700 Drancy (FR)
(72) Inventeur: Gautier, Jean-Pierre, AlliedSignal Europe, F-93700 Drancy (FR); Verbo, Ulysse, AlliedSignal Europe, F-93700 Drancy (FR)
(74) Mandataire: Bentz, Jean-Paul

(56) Documents cités:
- EP-A- 0 159 148
- EP-A- 0 341 101
- FR-A- 1 560 915
- FR-A- 2 317 533
- FR-A- 2 493 783

## Description

La présente invention concerne les ensembles comprenant un servomoteur à dépression et un maître-cylindre utilisés sur les véhicules automobiles pour assister la commande de freinage.

Un tel servomoteur comporte de façon classique, dans une enveloppe extérieure, un volume divisé de façon étanche en une chambre avant et une chambre arrière par une cloison mobile, au moins un premier moyen élastique tendant à déplacer la cloison mobile vers la chambre arrière, la chambre avant étant soumise en permanence à une dépression, une différence de pression étant établie entre les chambres avant et arrière par un moyen de valve susceptible do relier la chambre arrière à l'atmosphère lors de l'actionnement de la pédale de frein. Cette différence de pression est utilisée pour déplacer la cloison mobile vers la chambre avant à l'encontre du moyen élastique, et actionner les pistons d'un maître-cylindre de frein. De façon à assurer un dosage convenable de l'effort sur la pédale, les servomoteurs classiques comportent dans le moyen de valve un disque de réaction, tel que décrit dans le document FR-A-2 630 694.

Il a été proposé de remplacer le disque de réaction qui est une pièce d'usure, par un autre moyen de réaction, comme dans le document FR-A-2 317 533 où le moyen de réaction est constitué par un piston commandé par la pression hydraulique existant dans la chambre primaire du maître-cylindre, ou dans le document FR-A-2 493 783 où le moyen de réaction est constitué par un piston commandé par la somme partielle des pressions hydrauliques existant dans les chambres du maître-cylindre.

Ces systèmes ne permettent pas de contrôler l'évolution de la réaction au cours de l'augmentation de l'effort du servomoteur sur le maître-cylindre, ce qui est souhaité par les constructeurs d'automobiles, pour que la pression engendrée par le maître-cylindre ne varie pas en fonction linéaire de l'effort exercé sur la pédale.

Il est généralement exigé qu'en début de freinage, il y ait un "saut", qui définit une montée brutale de la pression dans le maître-cylindre, sans augmentation de l'effort sur la pédale, ce saut ayant une valeur bien définie.

Conformément à l'invention, ce résultat est obtenu dans le cas d'un servomoteur à réaction hydraulique par le fait que le poussoir est solidaire de la cloison mobile, et par l'addition d'un deuxième moyen élastique précontraint entre le poussoir et le piston de réaction, chargeant le piston de réaction vers le maître-cylindre. On retarde ainsi la transmission à la pédale de cette réaction.

Le saut pourra de cette manière être rendu conforme à la valeur désirée.

L'invention sera mieux comprise, et d'autres buts, avantages et caractéristiques de celle-ci apparaîtront plus clairement à la lecture de la description qui suit d'un mode préféré de réalisation donné à titre d'exemple non limitatif en référence aux dessins sur lesquels :
la figure 1 représente schématiquement en coupe un ensemble comprenant un servomoteur d'assistance au freinage et un maître-cylindre réalisé conformément à la présente invention, et
la figure 2 représente la courbe de la pression engendrée par le maître-cylindre en fonction de l'effort appliqué à la pédale et obtenue avec l'ensemble de la figure 1.

Par convention, on appelle "avant" la direction dans laquelle les pièces se déplacent lorsqu'elles sont actionnées et "arrière" la direction dans laquelle les pièces se déplacent pour revenir à leur position de repos. Ainsi, sur la figure, l'avant est situé à gauche et l'arrière est situé à droite.

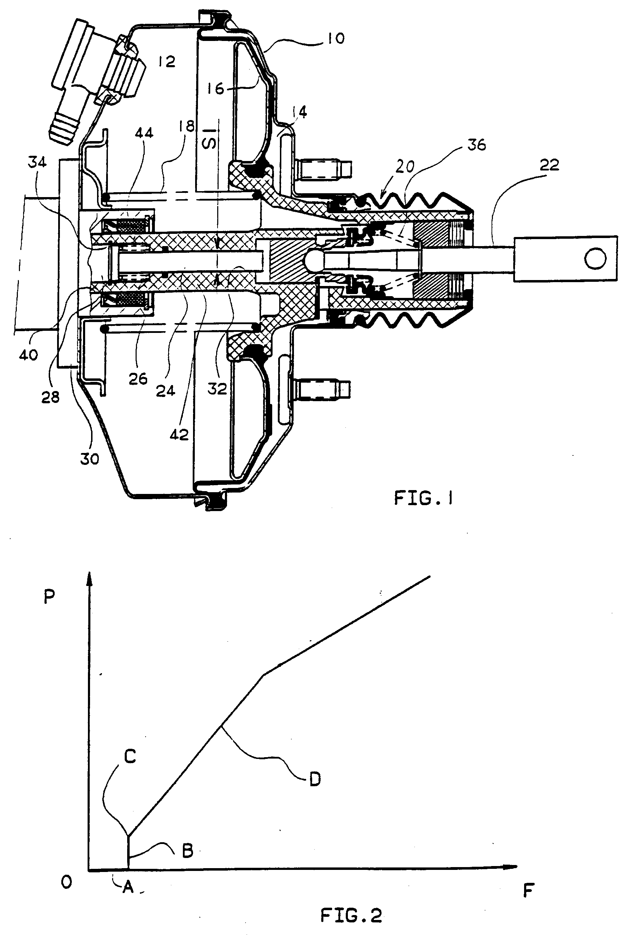

La figure 1 est une vue d'un servomoteur comportant de façon classique une enveloppe extérieure 10, dont l'intérieur est divisé en deux chambres avant 12 et arrière 14 par une cloison mobile 16, au moins un premier moyen élastique 18 tendant à déplacer la cloison mobile vers la chambre arrière, dans sa position de repos.

Un maître-cylindre 30 est fixé à la paroi avant de l'enveloppe, et comporte un alésage 40 dans lequel coulisse de manière étanche un poussoir 42 solidaire de la cloison mobile 16, et délimitant dans le maître-cylindre une enceinte 28.

La chambre avant 12 est reliée en permanence à une source de dépression, tandis qu'une différence de pression est établie entre les chambres par un moyen de valve 20 lors de l'actionnement d'une tige de commande 22 reliée à une pédale de frein (non représentée), pour déplacer la cloison mobile 16 et produire ainsi une pression hydraulique dans l'enceinte 28 du maître-cylindre 30.

La tige de commande est rappelée en position de repos par un ressort 36.

Dans le poussoir 42 coulisse de manière étanche un piston de réaction 24, soumis à la pression de l'enceinte 28 sur sa section S1. Un ressort de compression pré-contraint 26 logé dans une partie étagée 44 de l'alésage 32 du poussoir 42, charge le piston vers l'avant, ce dernier étant arrêté dans cette direction par un anneau de blocage 34 logé dans une gorge du poussoir.

L'ensemble fonctionne de la manière suivante :
Un premier effort sur la pédale va servir à dépasser la pré-contrainte du ressort 36 de la tige de commande comme illustré par la partie A de la courbe figure 2. Cette partie de la courbe représente une augmentation de l'effort appliqué à la pédale sans déplacement d'aucune partie du servomoteur, donc sans aucune augmentation de la pression dans le maître-cylindre.

L'effort de commande augmentant, le moyen de valve 20 détermine une différence de pressions entre les deux chambres 12 et 14, laquelle fait avancer la cloison mobile 16 et monter la pression dans l'enceinte 28 du maître cylindre. Dans un premier temps la valeur de cette pression dans l'enceinte 28 multipliée par la section S1 ne dépasse pas la pré-contrainte du ressort 26. Le piston de réaction n'a donc pas d'effet sur la pédale jusqu'à ce que la pression atteigne une valeur déterminée, comme illustré par la partie B de la courbe de la figure 2. Cette partie traduit une augmentation de pression dans le maître-cylindre sans augmentation de l'effort sur la pédale.

L'effort de commande augmentant encore la pression dans l'enceinte 28 multipliée par la section S1 atteint la pré-contrainte du ressort 26. Le piston se déplace vers l'arrière et commence à appuyer sur la tige de commande 22 comme illustré par le point C de la courbe de la Fig. 2.
La grandeur de la partie B représente la valeur du saut.

Lorsque l'effort de commande augmente encore, la pression dans le maître-cylindre augmente comme représenté par la partie D de la courbe de la Figure 2, avec une augmentation correspondante de la réaction.

On voit que de cette façon la précontrainte du ressort 26 permet d'obtenir un saut de la valeur désirée. Le ressort 26 pourrait être remplacé par tout autre moyen élastique, tel que par exemple un empilage de rondelles Belleville, à condition que la précontrainte de ce moyen puisse être obtenue avec précision.

Ce moyen élastique pourrait également être placé de manière quelconque, pourvu qu'il charge le piston 24 vers l'avant de la valeur désirée.

## Revendications

1. Ensemble comprenant un servomoteur d'assistance au freinage et un maître-cylindre comportant dans une enveloppe extérieure (10) un volume divisé de façon étanche en une chambre avant (12) et une chambre arrière (14) par une cloison mobile (16), au moins un premier moyen élastique (18) tendant à déplacer la cloison mobile vers la chambre arrière, la chambre avant étant reliée à une source de dépression, un moyen de valve (20) susceptible de relier la chambre arrière à l'atmosphère lors de l'actionnement d'une tige de commande (22) pour déplacer la cloison mobile (16) vers la chambre avant, un maître-cylindre (30) fixé sur la paroi avant de l'enveloppe et comportant un alésage (40) dans lequel coulisse de manière étanche un poussoir (42) délimitant une enceinte (28) dans le maître-cylindre, ce poussoir comportant un alésage (32) dans lequel coulisse de manière étanche un piston de réaction (24) soumis à la pression de l'enceinte (28), caractérisé en ce que le poussoir (42) est solidaire de la cloison mobile (16), et en ce qu'un deuxième moyen élastique pré-contraint (26) entre le poussoir (42) et le piston de réaction (24) charge ledit piston de réaction vers le maître-cylindre.

2. Ensemble de servomoteur et maître-cylindre selon la revendication 1, caractérisé en ce que le deuxième moyen élastique (26) est logé dans une partie étagée (44) de l'alésage (32) du poussoir (42).

3. Ensemble de servomoteur et maître-cylindre selon la revendication 1 ou 2, caractérisé en ce que le deuxième moyen élastique (26) est un ressort.

## Claims

1. Assembly comprising a brake-booster and a master cylinder having, in an outer casing (10), a space divided in leakproof fashion into a front chamber (12) and a rear chamber (14) by a movable partition (16), at least one first resilient means (18) tending to displace the movable partition towards the rear chamber, the front chamber being connected to a vacuum source, a valve means (20) capable of connecting the rear chamber to the atmosphere upon actuation of a control rod (22) in order to displace the movable partition (16) towards the front chamber, a master cylinder (30) fixed on the front wall of the casing and having a bore (40) in which a tappet (42) delimiting an enclosed space (28) in the master cylinder slides in leakproof fashion, this tappet having a bore (32) in which a reaction piston (24) subjected to the pressure of the enclosed space (28) slides in leakproof fashion, characterized in that the tappet (42) is integral with the movable partition (16) and in that a second prestressed resilient means (26) between the tappet (42) and the reaction piston (24) stresses the said reaction piston towards the master cylinder.

2. Servomotor and master-cylinder assembly according to Claim 1, characterized in that the second resilient means (26) is accommodated in a stepped part (44) of the bore (32) of the tappet (42).

3. Servomotor and master-cylinder assembly according to Claim 1 or 2, characterized in that the second resilient means (26) is a spring.

## Patentansprüche

1. Baugruppe aus einem Bremsunterstützungs-Servomotor und einem Hauptzylinder, die in einem Außengehäuse (10) ein von einer beweglichen Trennwand (16) in dichter Weise in eine vordere Kammer (12) und eine hintere Kammer (14) unterteiltes Volumen sowie wenigstens ein erstes elastisches Mittel (18) aufweist, das die bewegliche Trennwand zur hinteren Kammer zu verstellen sucht, wobei die vordere Kammer mit einer Unterdruckquelle verbunden ist, sowie ein Ventilmittel (20), das in der Lage ist, die hintere Kammer bei der Betätigung einer Steuerstange (22) mit der Atmosphäre zu verbinden, um die bewegliche Trennwand (16) zur vorderen Kammer zu verstellen, und einen Hauptzylinder (30), der an der vorderen Wand des Gehäuses befestigt ist und eine Bohrung (40) aufweist, in welcher in dichter Weise ein Stößel (42) gleitet, der einen Raum (28) in dem Hauptzylinder abgrenzt, wobei dieser Stößel eine Bohrung (32) aufweist, in welcher in dichter Weise ein dem Druck des Raumes (28) ausgesetzter Reaktionskolben (24) gleitet, dadurch gekennzeichnet, daß der Stößel (42) fest mit der beweglichen Trennwand (16) verbunden ist und daß ein vorgespanntes zweites elastisches Mittel (26) zwischen dem Stößel (42) und dem Reaktionskolben (24) den Reaktionskolben zum Hauptzylinder beaufschlagt.

2. Baugruppe aus Servomotor und Hauptzylinder nach Anspruch 1, dadurch gekennzeichnet, daß das zweite elastische Mittel (26) in einem Stufenabschnitt (44) der Bohrung (32) des Stößels (42) angeordnet ist.

3. Baugruppe aus Servomotor und Hauptzylinder nach Anspruch 1 oder 2, dadurch gekennzeichnet, daß das zweite elastische Mittel (26) eine Feder ist.
